(19) Europäisches Patentamt
European Patent Office
Office européen des brevets

(11) Numéro de publication: **0 414 591 B1**

(12) # FASCICULE DE BREVET EUROPEEN

(45) Date de publication de fascicule du brevet: **12.10.94**

(51) Int. Cl.[5]: **C07F 9/165**, C10M 137/10

(21) Numéro de dépôt: **90402274.6**

(22) Date de dépôt: **08.08.90**

(54) **Utilisation comme additifs de dihydrocarbyldithiophosphyldithiophosphate de cuivre et zinc.**

(30) Priorité: **21.08.89 FR 8911153**

(43) Date de publication de la demande:
**27.02.91 Bulletin 91/09**

(45) Mention de la délivrance du brevet:
**12.10.94 Bulletin 94/41**

(84) Etats contractants désignés:
**BE DE GB IT NL**

(56) Documents cités:
**EP-A- 0 216 676**
**DE-C- 948 156**
**US-A- 4 766 228**

(73) Titulaire: **INSTITUT FRANCAIS DU PETROLE**
**4, Avenue de Bois Préau**
**F-92502 Rueil-Malmaison (FR)**

(72) Inventeur: **Born, Maurice**
**72, rue du Vieux Pont**
**F-92000 Nanterre (FR)**
Inventeur: **Hipeaux, Jean-Claude**
**22, rue de la Fraternité**
**F-92700 Colombes (FR)**
Inventeur: **Maran, Valérie**
**18, rue Paul Olivier**
**F-92500 Rueil Malmaison (FR)**
Inventeur: **Rossi, Armand**
**22, rue Vattelière**
**F-76290 Montivilliers (FR)**
Inventeur: **Thebault, Michel**
**71 Boulevard de Strasbourg**
**F-76600 Le Havre (FR)**

**EP 0 414 591 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne l'utilisation en tant qu'additifs antioxydants, antiusure, extrême-pression et anticorrosifs pour huiles lubrifiantes des composés du type dihydrocarbyldithiophosphyldithiophosphates de cuivre, et de zinc ainsi que les lubrifiants les contenant.

Les dihydrocarbyldithiophosphyldithiophosphates métalliques et notamment ceux du zinc, du cadmium, du plomb et de l'antimoine, sont déjà décrits dans le brevet US-A 4 766 228. Ils se caractérisent, lorsqu'il s'agit de sels de métaux bivalents, par des proportions atomiques Métal/P/S d'environ 1/6/12.

Les dihydrocarbyldithiophosphyldithiophosphates de cuivre de l'invention se caractérisent, suivant qu'ils sont préparés à partir de sels de cuivre mont ou bivalent, par des rapports métal/P/S de préférence d'environ 1/3/6 pour le cuivre monovalent, ou 1/6/12 pour le cuivre bivalent. Ils peuvent être représentés par la formule générale I :

(1)

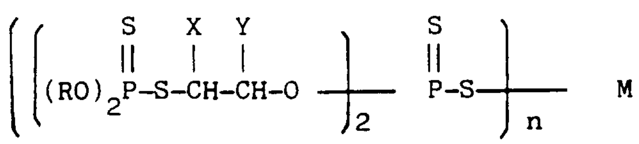

dans laquelle R représente un radical substantiellement hydrocarboné monovalent (ou un mélange de radicaux substantiellement hydrocarbonés monovalents) de 1 à 30 atomes de carbone.

X et Y représentent chacun un atome d'hydrogène ou un radical substantiellement hydrocarboné monovalent de 1 à 30 atomes de carbone, pouvant être reliés entre eux pour former une chaîne polyméthylénique. Ainsi X et Y peuvent représenter chacun un atome d'hydrogène ou un groupement méthyle, chlorométhyle ou éthyle, octyle ou octanoate d'alkyle, ou forment ensemble une chaîne polyléthylénique à 4 groupements $CH_2$.

M représente le cuivre dans l'un de ses deux degrés d'oxydation courants soit $Cu^{(n+)}$ et n le degré d'oxydation ou plus précisément l'équivalent de l'anion du sel $Cu^{(n+)}$.

Les radicaux R peuvent être aliphatiques, arylaliphatiques, alicycliques, aromatiques, alkylaromatiques et renfermer éventuellement un ou plusieurs atomes tels que par exemple l'oxygène, l'azote, le soufre, le phosphore ou un halogène etc.

Les composés selon l'invention peuvent être préparés par un procédé comprenant essentiellement les étapes suivantes :
Dans une étape (a), on prépare tout d'abord un acide dithiophosphorique, dit de "première génération", par réaction entre un composé hydroxylé (alcool ou phénol substitué ou non), et du pentasulfure de phosphore.

La réaction peut être représentée par l'équation suivante :

(1)

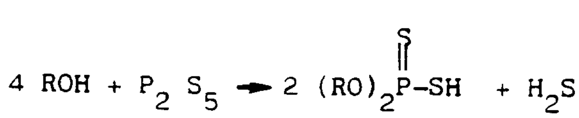

(II)

dans laquelle R est défini comme précédemment. Comme composés hydroxylés utilisables, on peut citer les monoalcools aliphatiques saturés ou insaturés tels que le méthanol, éthanol, propanols, butanols, pentanols, hexanols, heptanols, octanols, nonanols, etc. ; les mélanges de monoalcools d'origine naturelle (par exemple l'huile de fusel) ou synthétique (par exemple les alcools provenant du procédé ALFOL) ; les monoalcools alicycliques tels que le cyclohexanol; les halogénures de monoalcools aliphatiques, alicycliques ou aromatiques-aliphatiques tels que par exemple les chloro-2 et bromo-2 éthanols, les chloro- et bromo-propanols, butanols, pentanols, etc. ; les alcools chloro- ou bromo-benzyliques, les alcools chloro- ou bromo-phényléthyliques.

On peut également utiliser les monoalcools (poly-)oxyalkylènés tels que par exemple les (poly-)méthoxy-, propoxy-, butoxy-, phénoxy-, alkylphénoxy-, éthanols et propanols, ainsi que leurs dérivés halogènés ; et les composés hydroxylés aromatiques tels que le phénol et ses dérivés substitués.

Il doit être entendu qu'il est possible dans cette étape d'utiliser un mélange de deux ou plusieurs composés hydroxylés ainsi définis.

La réaction du ou des composés hydroxylés avec le pentasulfure de phosphore est généralement réalisée comme dans l'art antérieur à savoir à des températures comprises entre 20 et 180 °C, et de préférence entre 50 et 150 °C, les réactifs étant mis en jeu dans des proportions correspondant à la stoechiométrie, ou voisines de celle-ci.

Dans une deuxième étape (b), on fait réagir le produit (II) obtenu à l'étape (a) avec un composé à fonction époxyde, tel que par exemple l'oxyde d'éthylène, de propylène de chloropropylène, de butylène ou de cyclohexène ou encore un oxyde d'ester d'acide gras, en particulier un époxy-stéarate d'alkyle (par exemple d'octyle). On utilise de préférence les oxydes d'éthylène et de propylène. La réaction peut être représentée par l'équation 2 ci-après :

(2)

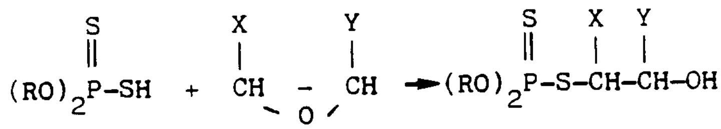

(II) (III)

dans laquelle R, X et Y sont définis comme précédemment.

Il s'agit d'une réaction de $\beta$ - hydroxyalkylation du composé de formule (II), donnant naissance au composé hydroxylé de formule (III), qui est un alcool dithiophosphoré.

Cette réaction est généralement réalisée à des températures comprises entre 0 et 150 °C, et de préférence entre 20 et 130 °C, les réactifs étant mis en jeu dans les proportions correspondant à la stoechiométrie, ou voisines de celle-ci.

Dans une troisième étape (c), on fait réagir l'alcool dithiophosphoré (III) avec du pentasulfure de phosphore, selon un schéma réactionnel que l'on peut représenter par l'équation 3 suivante :

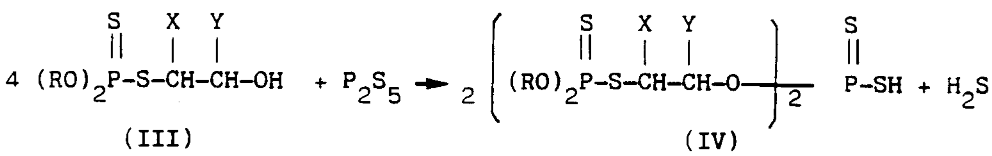

(III) (IV)

dans laquelle R, X et Y sont définis comme précédemment.

On obtient un acide dithiophosphyldithiophosphorique, dit de "deuxième génération" (formule (IV)).

La réaction est effectuée à des températures généralement comprises entre 20 et 120 °C, et de préférence entre 40 et 90 °C, les quantités relatives de réactifs étant voisines de la stoechiométrie.

Dans une quatrième étape (d), on fait réagir l'acide dithiophosphorique (IV) sous forme de sel de métal alcalin ou de sel d'ammonium avec un sel de cuivre au degré d'oxydation désiré pour le produit final. La réaction peut être représentée par l'équation 4 suivante :

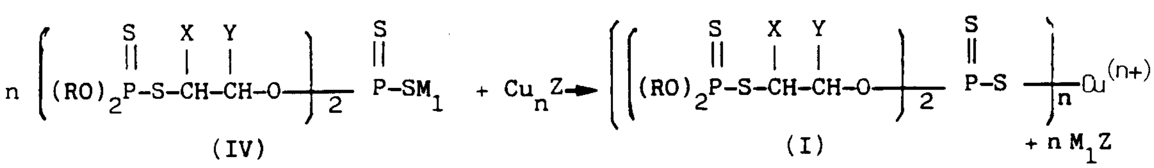

(IV) (I)

dans laquelle R, X, Y, M et n sont définis comme précédemment.

$M_1$ est un métal alcalin ou l'ammonium, n représente l'équivalent de l'anion du sel $Cu^{(n+)}$. Ainsi, Z peut être un atome d'halogène (chlore ou brome), un groupement nitrate ou carboxylate (acétate, formiate...), ou encore un demi groupement carbonate, sulfate, etc.

On opère généralement en milieu aqueux à des températures comprises entre 0 et 100 °C, et de préférence entre 40 et 60 °C le sel de cuivre $Cu_n$ étant utilisé en excès.

Selon un deuxième mode de synthèse des produits de l'invention, on peut faire réagir directement le produit (III) issu de l'étape (b) (alcool dithiophosphoré), avec du pentasulfure de phosphore en présence d'oxyde ou d'hydroxyde ou de carbonate de cuivre dans son degré d'oxydation désiré pour donner le dihydrocarbyldithiophosphyldithiophosphate de cuivre recherché, représenté par la formule générale :

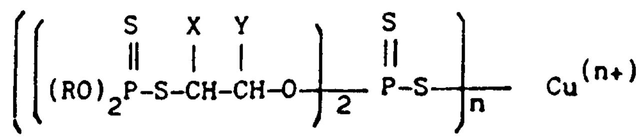

Dans cette réaction, on forme également du sulfure d'hydrogène et de l'eau. La réaction est réalisée généralement entre 40 et 100 °C et de préférence entre 60 et 90 °C, en présence d'un solvant permettant d'éliminer l'eau formée, par entraînement azéotropique, le solvant préféré étant le cyclohexane.

Les produits de l'invention, qui peuvent être décrits comme étant des dihydrocarbyldithiophosphyldithiophosphates de cuivre, peuvent être avantageusement utilisés comme additifs pour lubrifiants minéraux et/ou synthétiques notamment pour la protection des organes métalliques contre l'usure et la corrosion, et pour la protection des lubrifiants contre l'oxydation.

Ces additifs peuvent être utilisés, par rapport à la masse du lubrifiant, à des concentrations pondérales comprises généralement entre 0.1 et 3 %,

mais leur intérêt principal réside dans l'effet de synergie antioxidante qu'ils induisent lorsqu'ils sont associés aux dihydrocarbyldithiophosphyldithiophosphates de zinc dont la formule est :

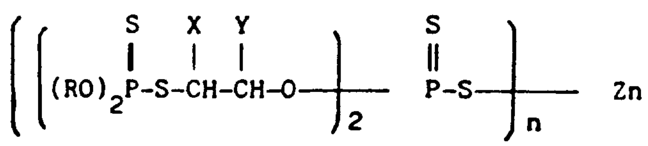

dans laquelle R représente au moins un radical substantiellement hydrocarboné monovalent renfermant de 1 à 30 atomes de carbone ; X et Y représentent chacun un atome d'hydrogène ou un radical substantiellement hydrocarboné de 1 à 30 atomes de carbone, pouvant être reliés entre eux pour former une chaîne polyméthylénique, et n est la valence du zinc.

Cet effet de synergie antioxydante inattendu, permet de formuler des huiles lubrifiantes possédant des propriétés antiusure et antioxydante très élevées pour des doses pondérales d'additifs relativement faibles En outre la faible teneur en métaux de ces associations d'additifs au cuivre ou zinc permet, à performances égales vis-à-vis des dialkyldithiophosphates métalliques classiques (qui renferment une teneur en métaux beaucoup plus élevée, et qui sont utilisés eux aussi à des doses pondérales comprises entre 0,8 et 2 %) d'assurer une meilleure protection des pots catalytiques équipant les véhicules automobiles.

La concentration pondérale en additifs au cuivre et au zinc dans l'huile lubrifiante est comprise, pour l'additif au cuivre entre 0,1 et 0,5, de préférence entre 0,15 et 0,3 %, et pour l'additif au zinc entre 0,1 et 3 %, de préférence entre 0,7 et 1,2 %.

L'effet de synergie antioxydante est observé plus particulièrement lorsque le dihydrocarbyldithiophosphyldithiophosphate de cuivre et le dihydrocarbyldithiophosphyldithiophosphate de zinc sont utilisés à des concentrations correspondant à un rapport atomique cuivre sur zinc compris entre 0,03 et 5 et de préférence entre 0,03 et 1,3.

Les exemples suivant illustrent l'invention, mais ils ne doivent en aucune manière être considérés comme limitatifs.

EXEMPLE 1

Synthèse d'un dialkyldithiophosphyldithiophosphate de zinc par la méthode dite par [r] "Doucle décomposition".

- Synthèse d'un alcool thiophosphoré à partir de méthyl-4 pentanol-2.

Dans un réacteur de 4 litres muni d'un agitateur et purgé à l'azote, on introduit 940,0g (9,21 moles) de méthyl-4 pentanol-2, 444,4 g (2 moles) de $P_2S_5$; la température de formation de l'acide de "première génération" est de 85-90 °C. Après élimination de l'$H_2S$ dissous, par barbotage d'un courant d'azote, l'acide dialkyldithiophosphorique obtenu est transformé en alcool thiophosphoré par addition, entre 30 et 35 °C, de 243,7 g (4,2 moles) d'oxyde de propylène. Les excès d'alcool et d'oxyde de propylène sont éliminés par chauffage à 100 °C sous pression réduite.

On recueille 1400 g d'alcool thiophosphoré limpide, un peu visqueux, très peu coloré, dont l'analyse élémentaire est la suivante :

| C % masse | | H % masse | | S % masse | | P % masse | |
|---|---|---|---|---|---|---|---|
| Exp. | Théo. | Exp. | Théo. | Exp. | Théo. | Exp. | Théo. |
| 49,81 | 50,53 | 9,22 | 9,33 | 17,25 | 17,99 | 8,47 | 8,69 |

Les analyses IR et $^{13}C$ confirment la structure chimique attendue, à savoir :

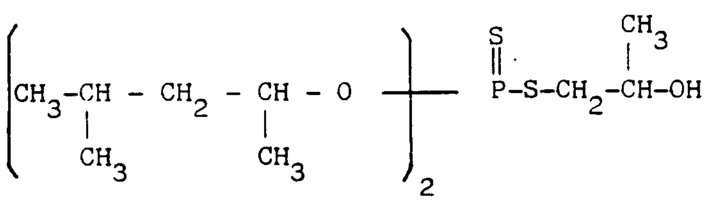

Dans un second réacteur de 1 litre, muni d'un agitateur et purgé à l'azote, on introduit 150 g de l'alcool thiophosphoré précédemment obtenu (0,42 mole), puis on le chauffe jusqu'à 95 °C.

A l'aide d'un dispositif d'introduction de poudre, on ajoute progressivement sous agitation, en 2 heures, 22.2 g (0,10 mole) de $P_2S_5$ en maintenant la température vers 95 °C. On refroidit, on filtre sous atmosphère inerte en présence de terre de diatomées, et l'on récupère 176 g d'acide de 2ème génération (acidité = 1,2 $10^{-3}$ équivalent acide/g).

On neutralise cet acide à l'aide d'une solution de 8,8 g de soude dans 200 $cm^3$ d'eau. La solution laiteuse obtenue est extraite avec 3 fois 350 $cm^3$ d'hexane pour éliminer l'excès d'alcool thiophosphoré et une partie du sel de sodium de l'acide, partiellement soluble.

La solution aqueuse (inférieure), contenant le sel de sodium purifié de l'acide, est traitée pendant 3 heures sous agitation par une solution de 45,5 g de sulfate de zinc heptahydraté Zn $SO_4$, 7 $H_2O$ (0,158 mole) dans 100 $cm^3$ d'eau.

La suspension laiteuse obtenue est extraite avec trois fois 200 $cm^3$ de cyclohexane. Les extraits cyclohexaniques réunis sont lavés à l'eau, séchés sur sulfate de sodium anhydre, filtrés sur terre de diatomées, puis évaporés à 100 °C sous pression réduite jusqu'à masse constante.

On récupère environ 105 g d'un produit organique translucide très visqueux dont l'analyse élémentaire, (Tableau I), et les analyses RMN $^{13}C$, $^{1}H$ confirment la structure, de même que l'analyse infra-rouge qui indique des bandes d'absorption caractéristiques des dialkyldithiophosphates de zinc, notamment à 970 $cm^{-1}$ (attribuable aux groupements P-O-C issus d'alcools secondaires), à 665 $cm^{-1}$ (attribuable aux groupements P = S) et à 545 $cm^{-1}$ (attribuable aux groupements P-S) ; on observe que ces bandes d'absorption sont sensiblement plus intenses que celles du di-sec-butyl dithiophosphate de zinc classique correspondant, notamment pour les bandes P = S et P-S. Le produit obtenu correspond à la formule suivante :

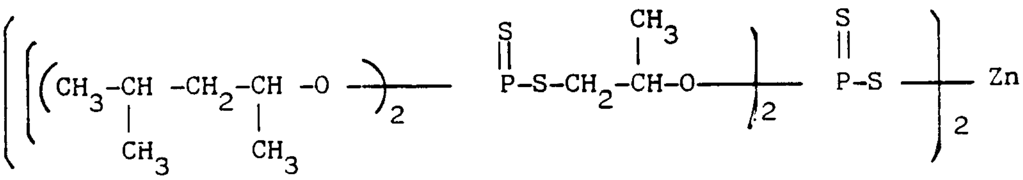

EXEMPLE 2

Synthèse d'un dialkyldithiophosphyldithiophosphate de zinc par la méthode à l'oxyde métallique.

Dans un réacteur de 1 litre, équipé d'un système séparateur DEAN-STARK avec réfrigérant et d'un système d'admission de réactifs en poudre, on introduit 150 g (0,42 mole) d'alcool thiophosphoré préparé dans l'exemple 1,300 $cm^3$ de cyclohexane et 12,2 g (0,15 mole) de ZnO.

La suspension obtenue est chauffée sous agitation jusqu'au reflux du cyclohexane ; la température du milieu s'établit entre 85 et 90 ° C.

Par l'intermédiaire du système d'introduction de réactifs en poudre, on ajoute progressivement en 3 heures 22,2 g (0,1 mole) de $P_2S_5$, l'eau de réaction étant entraînée par effet hétéroazéotropique du solvant.

Après 7 heures supplémentaires de reflux, filtration du mélange puis évaporation du solvant sous pression réduite, on récupère 165 g d'un produit visqueux. limpide et très peu coloré, dont l'analyse élémentaire (Tableau 1), et les analyses RMN $^1H$,$^{13}C$,$^{31}P$ confirment la structure.

EXEMPLE 3

Synthèse d'un dialkyldithiophosphyldithiophosphate de cuivre bivalent par la méthode dite de "double décomposition".

L'expérimentation de l'exemple 1 est reprise en substituant le sulfate de zinc par la même quantité molaire de chlorure de cuivre bivalent bihydraté $CuCl_2$, $2H_2O$ (0,158 mole) soit 26,9 g.

Après réaction puis traitements, on récupère 148 g d'un produit visqueux, très coloré en vert sombre mais néanmoins limpide ; l'analyse élémentaire (Tableau 1), les analyses RMN $^1H$,$^{13}C$ et infra-rouge confirment la structure présumée à savoir :

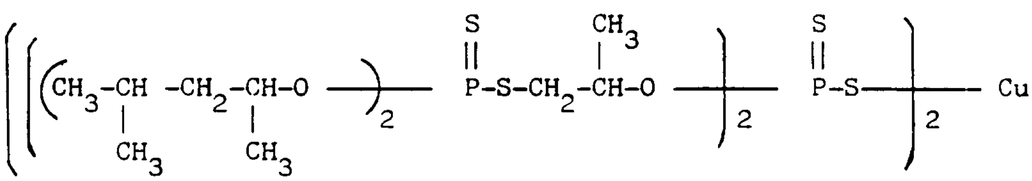

EXEMPLE 4

Synthèse d'un dialkyldithiophosphyldithiophosphate de cuivre bivalent par la méthode à l'oxyde métallique.

L'expérimentation de l'exemple 2 est reprise en faisant réagir, dans les mêmes conditions de synthèse, 150 g (0,42 mole) d'alcool thiophosphoré préparé dans l'exemple 1,11,9 g de CuO (0,5 mole) et 22,2 g (0,1 mole) de $P_2S_5$ dans 300 $cm^3$ de cyclohexane.

On recueille ainsi 154 g de produit dont l'analyse élémentaire (Tableau 1), les analyses RMN $^1H$,$^{13}C$ et infra-rouge sont très proches de celles de l'additif obtenu dans l'exemple 3, et qui confirment la structure présumée.

EXEMPLE 5

Synthèse d'un dialkyldithiophosphyldithiophosphate de cuivre bivalent à partir de sels de cuivre bivalent autres que l'oxyde.

L'expérimentation de l'exemple 4 est reprise en substituant le CuO (0,15 mole), par 12,2 g de carbonate de cuivre (constitué en fait par un mélange équimolaire de $CuCO_3$ et de $Cu(OH)_2$).

Comme pour le produit de l'exemple 3, les analyses du produit obtenu confirment la structure chimique visée.

EXEMPLE 6

Synthèse de dialkyldithiophosphyldithiophosphate complexe de zinc et de cuivre bivalents.

L'expérimentation de l'exemple 2 est reprise en faisant réagir 150 g d'alcool thiophosphoré de l'exemple 1 avec 22,2 g de $P_2S_5$, et un mélange d'oxydes métalliques constitué par 2,19 g de CuO (0,0275 mole) et par 8,96 g de ZnO (0,11 mole), soit un rapport atomique Zn/Cu = 4.

Après 10 heures d'entraînement hétéroazéotropique avec le cyclohexane, filtration et évaporation, on recueille 158 g d'un produit visqueux, limpide mais fortement coloré en vert sombre, dont les analyses corroborent la structure chimique visée (Tableau 1).

EXEMPLE 7

Synthèse d'un dialkyldithiophosphyldithiophosphate de cuivre monovalent.

L'expérimentation de l'exemple 4 est reprise en substituant le cuivre bivalent contenu dans les 11,9 g de CuO par une quantité molaire moitié moindre de $Cu_2O$ (0,075 mole = 10,73 g) à savoir par une masse correspondante de métal identique.

Les analyses confirment la structure chimique présumée du produit obtenu (Tableau 1), à savoir :

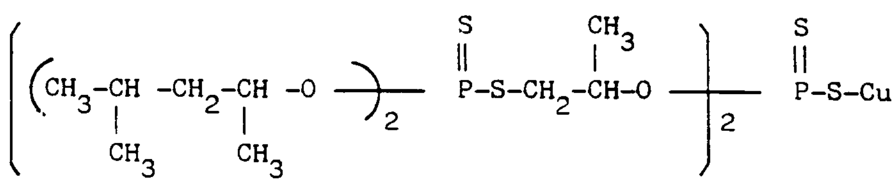

EXEMPLE 8

Synthèse d'un dialkyldithiophosphyldithiophosphate complexe de cuivre monovalent et de cuivre bivalent.

L'expérimentation de l'exemple 7 est reprise en faisant réagir, dans les mêmes conditions de synthèse, 150 g (0,42 mole) d'alcool thiophosphoré, 22,2 g de $P_2S_5$, et un mélange constitué par 5,97 g de CuO (0,075 mole), et par 5,38 g de $Cu_2O$ (0,0375 mole) ; soit un rapport atomique $Cu^{++}/Cu^{+}$ = 1.

Après réaction puis traitement, on recueille 154 g de produit dont les analyses confirment la structure visée (Tableau 1).

EXEMPLE 9

Synthèse d'un dialkyldithiophosphyldithiophosphate complexe de zinc et de cuivre monovalent.

L'expérimentation de l'exemple 6 est reprise en faisant réagir 150 g d'alcool thiophosphoré de l'exemple 1 avec 22,2 g de $P_2S_5$, et un mélange d'oxydes métalliques constitué par 6,1 g de ZnO (0,075 mole) et par 5,34 g de $Cu_2O$ (0,0375 mole), soit un rapport atomique Zn/Cu = 1.

Après 10 heures d'entraînement hétéroazéotropique avec le cyclohexane, filtration et évaporation, on recueille 157 g d'un produit visqueux, limpide mais fortement coloré en vert sombre, dont les analyses corroborent la structure chimique visée (Tableau 1).

EVALUATION DES PROPRIETES ANTIOXYDANTES DES ADDITIFS SELON L'INVENTION.

Les propriétés antioxydantes des additifs de l'invention et l'effet de synergie antioxydante, obtenus en associant dans une même formule lubrifiante, des dialkyldthiophosphyldithiophosphates de zinc et de cuivre, sont démontrés au moyen de l'essai dit "TFOUT" (Thin-Film Oxygen Uptake Test) qui permet de

déterminer la stabilité à l'oxydation des huiles pour moteurs à essence par absorption d'oxygène en couche mince.

Cet essai, effectué à 160 °C, utilise une bombe pressurisée à l'oxygène ainsi qu'un catalyseur métallique, un catalyseur carburant, et de l'eau simulant les conditions auxquelles l'huile peut être soumise dans un moteur à essence. Cette méthode d'essai peut être utilisée pour des huiles moteurs dont la viscosité est comprise entre 3,8 et 26,1 $mm^2/s$ à 100 °C, y compris les huiles régénérées.

Les expérimentations sont réalisées avec une huile de base minérale 200 Neutral solvent contenant un paquet commercial d'additifs détergent-dispersant et améliorant d'indice de viscosité dans les proportions suivantes :

| | |
|---|---|
| Paquet détergent-dispersant | 10 % masse |
| Additif améliorant d'indice de viscosité | 5 % masse |

Le tableau 2 indique les retards à l'oxydation, de ce mélange lubrifiant, observés en présence des additifs de l'invention utilisés seuls ou en association. On constate que l'utilisation conjointe des dialkyldithiophosphyldithiophosphates de zinc et de cuivre de l'invention conduit à une résistance à l'oxydation du lubrifiant supérieure à celle à laquelle on aurait pu s'attendre en faisant la somme algébrique des effets antioxydants de chaque additif utilisé seul, d'où un effet de synergie antioxydante important entre ces deux types d'additifs.

TABLEAU 1

| Additif de l'exemple | Cation M n+ | ELEMENTS % Masse | | | | | | | | | | Métal/P/S en atomes | |
|---|---|---|---|---|---|---|---|---|---|---|---|---|---|
| | | Théorie | | | | | Trouvé | | | | | Théorie | Trouvé |
| | | C | H | S | P | Métal | C | H | S | P | Métal | | |
| 1 | Zn ++ | 43.16 | 7.24 | 23.05 | 11.13 | 3.91 | 44.01 | 7.92 | 22.75 | 11.06 | 4.01 | 1 / 6 / 12 | 1/6.1/11.6 |
| 2 | Zn ++ | 43.16 | 7.24 | 23.05 | 11.13 | 3.91 | 44.42 | 8.05 | 22.94 | 10.94 | 4.05 | | 1/5.7/11.5 |
| 3 | Cu ++ | 43.21 | 7.25 | 23.07 | 11.14 | 3.81 | 44.35 | 7.88 | 21.72 | 10.48 | 3.68 | | 1/5.8/11.7 |
| 4 | Cu ++ | 43.21 | 7.25 | 23.07 | 11.14 | 3.81 | 44.49 | 8.11 | 21.89 | 10.28 | 3.58 | | 1/6.0/12.4 |
| 5 | Cu ++ | 43.21 | 7.25 | 23.07 | 11.14 | 3.81 | 44.25 | 8.12 | 21.09 | 9.98 | 3.71 | | 1/5.5/11.3 |
| 6 | Zn ++<br>Cu ++ | 43.17 | 7.24 | 23.04 | 11.13 | 3.13<br>0.76 | 43.89 | 8.17 | 19.80 | 9.39 | 2.60<br>0.80 | | 1/5.8/11.8 |
| 7 | Cu + | 41.62 | 6.99 | 22.23 | 10.73 | 7.34 | 42.55 | 7.43 | 21.74 | 11.01 | 7.51 | 1 / 3 / 6 | 1/3.0/ 5.7 |
| 8 | Cu ++<br>Cu + | 42.67 | 7.16 | 22.78 | 11.00 | 5.02 | 43.39 | 7.51 | 20.93 | 10.44 | 5.31 | 1 / 4.5 / 9 | 1/4.0/ 8.6 |
| 9 | Zn ++<br>Cu + | 42.64 | 7.16 | 22.77 | 10.99 | 2.58<br>2.51 | 43.52 | 7.48 | 21.10 | 10.47 | 2.41<br>2.30 | 1 / 4.5 / 9 | 1/4.6/ 8.7 |

TABLEAU 2

| Additif de l'Ex. 1 DTPDTP Zn (% masse) | Additif de l'Ex 3 DTPDTP $Cu^{(++)}$ (% masse) | Retard à l'oxydation du lubrifiant (min) |
|---|---|---|
| 0,10 | - | 55 |
| 0,15 | - | 63 |
| 0,30 | - | 75 |
| 0,50 | - | 82 |
| 1,00 | - | 98 |
| 1,20 | - | 112 |
| 1,50 | - | 123 |
| - | 0,10 | 48 |
| - | 0,15 | 59 |
| - | 0,30 | 72 |
| - | 0,50 | 95 |
| 1,20 | 0,15 | 230 |
| 1,20 | 0,30 | 257 |

## Revendications

1. Utilisation en tant qu'additifs d'un composé du type dihydrocarbyldithiophosphyldithiophosphate de cuivre, représenté par la formule générale :

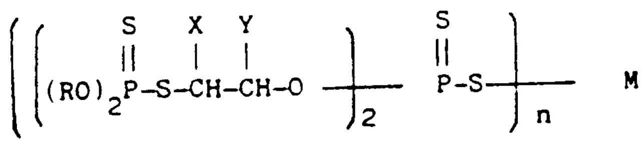

dans laquelle R représente au moins un radical substantiellement hydrocarboné monovalent renfermant de 1 à 30 atomes de carbone : X et Y représentent chacun un atome d'hydrogène ou un radical substantiellement hydrocarboné monovalent de 1 à 30 atomes de carbone, pouvant être reliés entre eux pour former une chaîne polyméthylénique, M représente le cuivre dans l'un de ses deux degrés d'oxydation courants et n représente le degré d'oxydation en mélange avec au moins un autre composé du type dihydrocarbyldithiophosphyldithiophosphate de zinc, représenté par la formule générale :

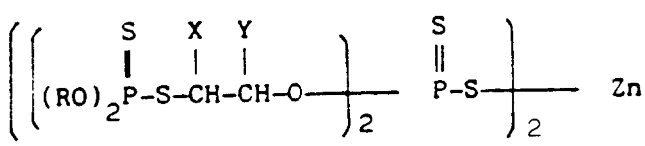

dans laquelle R représente au moins un radical substantiellement hydrocarboné monovalent renfermant de 1 à 30 atomes de carbone ; et X et Y représentent chacun un atome d'hydrogène ou un radical substantiellement hydrocarboné de 1 à 30 atomes de carbone, pouvant être reliés entre eux pour former une chaîne polyméthylénique.

2. Utilisation selon la revendication 1, caractérisée en ce que R représente au moins un radical choisi parmi les radicaux aliphatiques, arylaliphatiques, alicycliques aromatiques, alkyl-aromatiques renfermant éventuellement au moins un hétéroatome.

3. Utilisation selon l'une des revendication 1 et 2 caractérisée en ce que X et Y représentent chacun un atome d'hydrogène, un groupement méthyle, chlorométhyle ou éthyle octyle ou octanoate d'alkyle, ou forment ensemble une chaîne polyméthylénique à 4 groupements $CH_2$.

4. Composition lubrifiante, caractérisée en ce qu'elle comprend une proportion majeure d'huile lubrifiante minérale ou synthétique et à titre d'additifs une proportion mineure d'au moins un dihydrocarbyldithiophosphyldithiophosphate de cuivre et une proportion mineure d'au moins un dihydrocarbyldithiophosphyldithiophosphate de zinc, tels que définis dans l'une des revendications 1 à 3.

5. Composition lubrifiante selon la revendication 4, caractérisée en ce que la concentration pondérale en dihydrocarbyldithiophosphyldithiophosphate de cuivre est comprise entre 0,1 et 0,5% et la concentration pondérale en dihydrocarbyldithiophosphyldithiophosphate de zinc est comprise entre 0,1 et 3%.

6. Composition lubrifiante selon l'une des revendications 4 et 5, caractérisée en ce que le dihydrocarbyldithiophosphyldithiophosphate de cuivre et le dihydrocarbyldithiophosphyldithiophosphate de zinc sont utilisés à des concentrations correspondant à un rapport atomique cuivre sur zinc compris entre 0,03 et 5.

7. Composition lubrifiante selon la revendication 6, caractérisée en ce que lesdites concentrations correspondent à un rapport atomique cuivre sur zinc compris entre 0,03 et 1,3.

## Claims

1. Use as an additive of a compound of the copper dihydrocarbyl dithiophosphyldithiophosphate type, represented by the general formula :

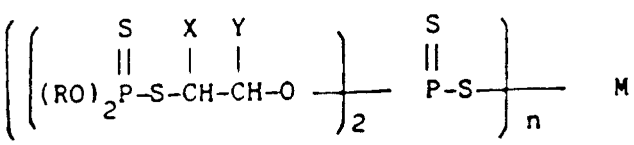

in which R represents at least one substantially hydrocarbon monovalent radical (or a mixture of substantially hydrocarbon monovalent radicals) containing 1 to 30 carbon atoms; X and Y each represents a hydrogen atom or a substantially hydrocarbon monovalent radical with 1 to 30 carbon atoms and which can be linked to form a polymethylene chain; M represents copper in one of its two ordinary degrees of oxidation; and n represents the degree of oxidation in mixing with at least another compound of the zinc dihydrocarbyldithiophosphyl dithiophosphate type, represented by the general formula :

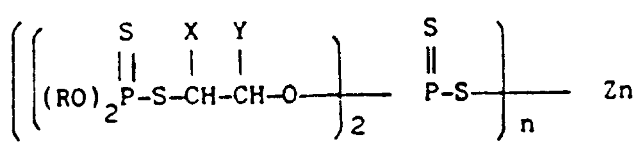

in which R represents at least one substantially hydrocarbon monovalent radical containing 1 to 30 carbon atoms; and X and Y each represents a hydrogen atom or a substantially hydrocarbon monovalent radical with 1 to 30 carbon atoms and which can be linked to form a polymethylene chain.

2. Use according to claim 1 , characterized in that R represents at least one radical chosen from among the aliphatic, arylaliphatic, alicyclic, aromatic and alkyl aromatic radicals optionally containing at least one heteroatom.

**3.** Use according to one of claims 1 and 2, characterized in that X and Y in each case represents a hydrogen atom, a methyl, chloromethyl or ethyl, octyl or alkyl octanoate group, or together form a polymethylene chain with 4 $CH_2$ groups.

**4.** A lubricating composition characterized in that it comprises a major proportion of mineral or synthetic oil and as an additive a minor proportion of at least a copper dihydrocarbyldithiophosphyldithiophosphate and a minor proportion of at least one zinc dihydrocarbyldithiophosphyldithiophosphate, as defined in one of claims 1 to 3.

**5.** A lubricating composition according to claim 4, characterized in the weight concentration of copper dihydrocarbyldithiophosphyldithiophosphate is comprised between 0.1 and 0.5% and the weight concentration of zinc dihydrocarbyldithiophosphyldithiophosphate comprised between 0.1 and 3%.

**6.** A lubricating composition according to one of the claims 4 and 5, characterized in that the copper dihydrocarbyldithiophosphyldithiophosphate and the zinc dihydrocarbyldithiophosphyldithiophosphate are used in concentration corresponding to an atomic ratio of copper/zinc comprised between 0.03 and 5.

**7.** A lubricating composition according to claim 6, characterized in that said concentrations correspond to an atomic ratio of copper/zinc comprised between 0.03 and 1.3.

**Patentansprüche**

**1.** Verwendung einer Verbindung vom Kupfer-dihydrocarbyldithiophosphyldithiophosphat-Typ der allgemeinen Formel

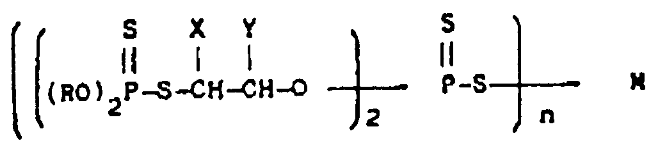

worin bedeuten:

- R — mindestens einen monovalenten im wesentlichen Kohlenwasserstoff-Rest,der 1 bis 30 Kohlenstoffatome enthält;
- X und Y — jeweils ein Wasserstoffatom oder einen monovalenten im wesentlichen Kohlenwasserstoff-Rest mit 1 bis 30 Kohlenstoffatomen, die untereinander verbunden sein können unter Bildung einer Polymethylen-Kette,
- M — Kupfer in einer seiner beiden üblichen Oxidationsstufen und
- n — die gemischte Oxidationsstufe,

zusammen mit mindestens einer anderen (weiteren) Verbindung vom Zink-dihydrocarbyldithiophosphyldithiophosphat-Typ der allgemeinen Formel

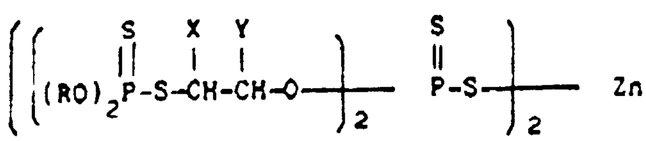

worin bedeuten:

- R — mindestens einen monovalenten im wesentlichen Kohlenwasserstoff-Rest,der 1 bis 30 Kohlenstoffatome enthält, und
- X und Y — jeweils ain Wasserstoffatom oder einen im wesentlichen Kohlenwasserstoffrest mit 1 bis 30 Kohlenstoffatomen, die miteinander verbunden sein können unter Bildung einer

Polymethylen-Kette,
als Zusätze.

2. Verwendung nach Anspruch 1, dadurch gekennzeichnet, daß R mindestens einen Rest darstellt, der ausgewählt wird aus den aliphatischen, arylaliphatischen, alicyclischen, aromatischen und alkylaromatischen Resten, die gegebenenfalls mindestens ein Heteroatom enthalten.

3. Verwendung nach einem der Ansprüche 1 und 2, dadurch gekennzeichnet, daß X und Y jeweils ein Wasserstoffatom, eine Methyl-, Chloromethyl- oder Ethyl-, Octyl- oder Alkyl-octanoat-Gruppe darstellen oder gemeinsam eine Polymethylen-Kette mit vier $CH_2$-Gruppen bilden.

4. Schmiermittel-Zusammensetzung, dadurch gekennzeichnet, daß sie einen größeren Mengenanteil an mineralischem oder synthetischem Schmieröl und als Zusätze einen kleineren Mengenanteil an mindestens einem Kupfer-dihydrocarbyldithiophosphyldithiophosphat und einen kleineren Mengenanteil an mindestens einem Zink-dihydrocarbyldithiophosphyldithiophosphat, wie in einem der Ansprüche 1 bis 3 definiert, enthält.

5. Schmiermittel-Zusammensetzung nach Anspruch 4, dadurch gekennzeichnet, daß die Gewichtskonzentration an Kupfer-dihydrocarbyldithiophosphyldithiophosphat zwischen 0,1 und 0,5 % liegt und die Gewichtskonzentration an Zink-dihydrocarbyldithiophosphyldithiophosphat zwischen 0,1 und 3 % liegt.

6. Schmiermittel-Zusammensetzung nach einem der Ansprüche 4 und 5, dadurch gekennzeichnet, daß das Kupfer-dihydrocarbyldithiophosphyldithiophosphat und das Zink-dihydrocarbyldithiophosphyldithiophosphat bei Konzentrationen verwendet werden, die einem Atomverhältnis von Kupfer zu Zink zwischen 0,03 und 5 entsprechen.

7. Schmiermittel-Zusammensetzung nach Anspruch 6, dadurch gekennzeichnet, daß die genannten Konzentrationen einem Atomverhältnis von Kupfer zu Zink zwischen 0,03 und 1,3 entsprechen.